# EUROPEAN PATENT SPECIFICATION

(11) **EP 2 287 579 B1**
(45) Date of publication and mention of the grant of the patent: **15.01.2020**
(21) Application number: 09746534.8
(22) Date of filing: 08.05.2009
(51) Int. Cl.: G01J 3/18, G02B 7/00, G01J 3/02

(54) **METHOD FOR MANUFACTURING SPECTROMETER**
VERFAHREN ZUR HERSTELLUNG EINES SPEKTROMETERS
PROCÉDÉ DE FABRICATION D UN SPECTROMÈTRE

(30) Priority: 15.05.2008 JP 2008128687; 05.12.2008 JP 2008311069
(43) Date of publication of application: 23.02.2011
(73) Proprietor: Hamamatsu Photonics K.K., Hamamatsu-shi, Shizuoka 435-8558 (JP)
(72) Inventor: SHIBAYAMA Katsumi, Hamamatsu-shi Shizuoka 435-8558 (JP)
(74) Representative: Hoffmann Eitle
(86) International application number: PCT/JP2009/058670
(87) International publication number: WO 2009/139327

(56) References cited:
- WO-A1-2008/149939
- WO-A2-2004/070329
- DE-A1- 19 717 014
- JP-A- 4 287 001
- JP-A- 2004 309 146
- JP-A- 2007 199 540
- JP-A- 2007 199 540
- US-A1- 2004 239 931
- LOEWEN E G ET AL: "REVIEW ARTICLES; Diffraction gratings for spectroscopy", JOURNAL OF PHYSICS E. SCIENTIFIC INSTRUMENTS, IOP PUBLISHING, BRISTOL, GB, vol. 3, no. 12, 1 December 1970 (1970-12-01), pages 953-961, XP020019580, ISSN: 0022-3735, DOI: 10.1088/0022-3735/3/12/201

## Description

### Technical Field

The present invention relates to a method for manufacturing a spectrometer which spectrally resolves and detects light.

### Background Art

As conventional spectrometers, those described in Patent Literatures 1 to 4 have been known, for example. Patent Literature 1 discloses a spectrometer in which light having entered the inside of a package is spectrally resolved by a spectroscopic unit and detected by a photodetector, while a member formed with a grating groove is fixed as the spectroscopic unit to an inner wall face of a cylindrical package.

### Citation List

### Patent Literature

Patent Literature 1: U.S. Patent No. 4644632
Patent Literature 2: Japanese Patent Application Laid-Open No. 2000-298066
Patent Literature 3: Japanese Patent Application Laid-Open No. 8-145794
Patent Literature 4: Japanese Patent Application Laid-Open No. 2004-354176

Further prior art is disclosed in patent documents US20040239931 and JP2007199540,and in the article "Diffraction gratings for spectroscopy", E.G. Loewen, JOURNAL OF PHYSICS E. SCIENTIFIC INSTRUMENTS (1970).

### Summary of Invention

### Technical Problem

When manufacturing a spectrometer such as the one mentioned above, however, a predetermined member is formed with a grating groove and then is fixed to the inner wall face of a package, which may complicate the process of manufacturing the spectrometer.

In view of such circumstances, it is an object of the present invention to provide a method for manufacturing a spectrometer which can easily manufacture a highly reliable spectrometer.

### Solution to Problem

For achieving the above-mentioned object, the method for manufacturing a spectrometer in accordance with the present invention is a method according to claim 1.

In this method for manufacturing a spectrometer, portions surrounding the first and second areas in the package are relatively thick, while the first and second areas are continuous with each other on the same curved surface. Therefore, distortions are hard to occur when the mold for forming the grating grooves is pressed against the resin layer formed in the first area, and the distortions generated in the package, if any, are dispersed in the area of the curved surface, whereby the grating grooves are inhibited from shifting their positions. This makes it possible to form the grating grooves by directly pressing the mold against the resin layer formed in the package and provide the package with the spectroscopic unit. Hence, a highly reliable spectrometer can be manufactured easily.

Preferably, in the method for manufacturing a spectrometer in accordance with the present invention, in the step of forming the resin layer, a photocurable resin agent is placed in the first area as the resin layer, and in the step of forming the grating grooves, the grating grooves are formed by curing the resin agent by irradiation with light while pressing a light transmitting mold against the resin agent. In this case, there is no need to apply heat to the resin agent when providing the package with a grating. Therefore, even a package constituted by a resin agent can be provided with the grating grooves.

Preferably, in the method for manufacturing a spectrometer in accordance with the present invention, in the step of preparing the package, the package is integrally molded from a resin such as to form a pair of sink mark mitigating grooves which are located on both sides of the spectroscopic unit in the predetermined direction and extend in a direction orthogonal to the predetermined direction. In this case, even if sink marks occur when preparing a resin-molded package, the pair of grooves mitigate the sink marks in the predetermined direction. Therefore, even when sink marks are generated in the package, the grating grooves are inhibited from shifting their positions in the predetermined direction, whereby a further highly reliable spectrometer can be manufactured.

### Advantageous Effects of Invention

The present invention can provide a method for manufacturing a spectrometer which can easily manufacture a highly reliable spectrometer.

### Brief Description of Drawings

[Fig. 1] is a sectional view of an embodiment of a spectrometer manufactured by the method for manufacturing a spectrometer in accordance with the present invention;
**[****Fig. 2****]** is an enlarged sectional view of a main part of the spectrometer of Fig. 1;
**[****Fig. 3****]** is a bottom plan view of the spectrometer of Fig. 1;
**[****Fig. 4****]** is a plan view of a package of the spectrometer of Fig. 1;
**[****Fig. 5****]** is a sectional view illustrating steps of manufacturing the spectrometer of Fig. 1; and
**[****Fig. 6****]** is a sectional view illustrating steps of manufacturing the spectrometer of Fig. 1.

### Description of Embodiments

In the following, preferred embodiments of the present invention will be explained in detail with reference to the drawings. In the drawings, the same or equivalent parts will be referred to with the same signs while omitting their overlapping descriptions.

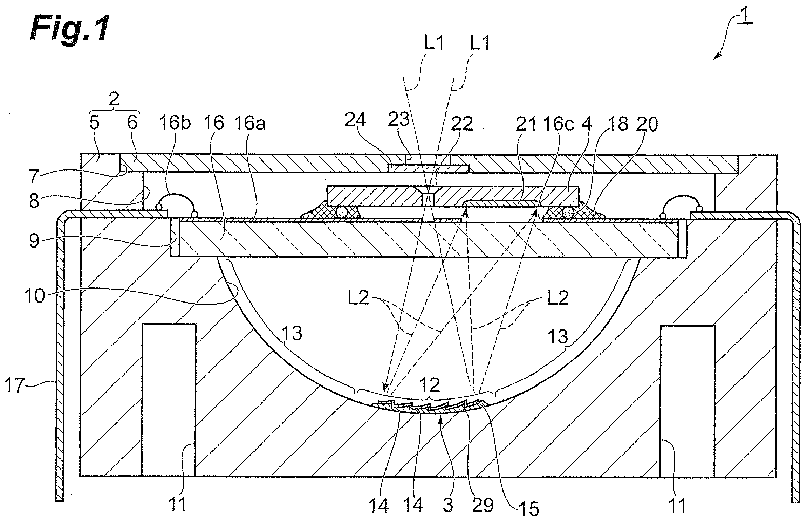

Fig. 1 is a sectional view of an embodiment of a spectrometer manufactured by the method for manufacturing a spectrometer in accordance with the present invention. As illustrated in Fig. 1, this spectrometer 1 is one in which a spectroscopic unit 3 reflects and spectrally resolves light L1 having entered the inside of a package 2, so as to yield light L2, which is then detected by a photodetector 4.

The package 2 has a rectangular parallelepiped box 5 and a rectangular plate-shaped lid 6. The box 5 and lid 6 are made of a light shielding or absorbing resin, examples of which include liquid-crystalline wholly aromatic polyester resins, polycarbonates, and black epoxy.

The box 5 is provided with a recess 7 having a rectangular cross section with a flat bottom face, while the bottom face of the recess 7 is formed with a recess 8 having a rectangular cross section with a flat bottom face. Further, the bottom face of the recess 8 is provided with a recess 9 having a rectangular cross section with a flat bottom face, while the bottom face of the recess 9 is provided with a semispherical recess 10. The bottom face of the box 5 is provided with a pair of grooves 11. The semispherical recess 10 may be either spherical or aspherical.

The inner wall face of the recess 10 includes a bottom area (first area) 12 and an area (second area) 13 surrounding the area 12. The areas 12, 13 are areas continuous with each other and exist on the same curved surface. The area 12 is formed with a grating 29 having a plurality of grating grooves 14 arranged in a row along a predetermined direction. The bottom part of the recess 10 is provided with the spectroscopic unit 3 including the grating 29. Types of the grating include sawtooth blazed gratings, rectangular binary gratings, and sinusoidal holographic gratings. Regulating the size of a reflecting film 15 can adjust the optical NA. The reflecting film 15 is disposed in an area smaller than the area 12 formed with the grating grooves 14 so as not to generate light which is only reflected without being spectrally resolved. A passivation film made of SiO₂, MgF₂, or the like, which is not depicted, may be formed by vapor deposition or the like so as to cover the reflecting film 15 of this reflection type grating. Here, the passivation film may be either larger or smaller than the area 12 formed with the grating grooves 14 as long as it covers the reflecting film 15.

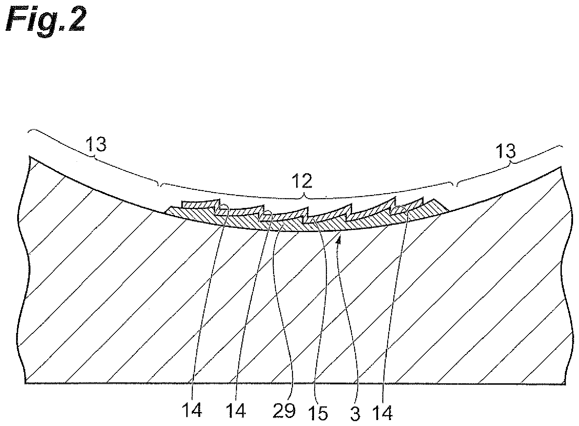

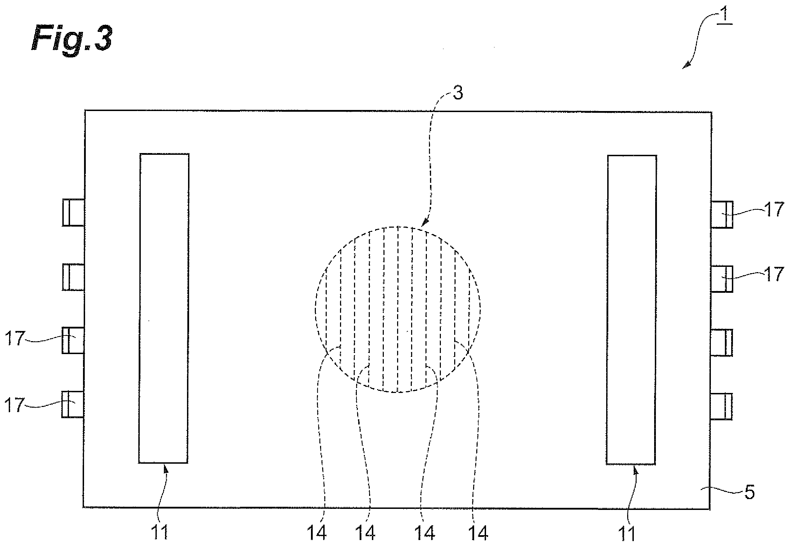

Fig. 2 is an enlarged sectional view of the spectroscopic unit 3, while Fig. 3 is a bottom face view of the spectrometer 1. As illustrated in Figs. 2 and 3, the spectroscopic unit 3 is constituted by the grating 29 formed with a plurality of grating grooves 14 and the reflecting film 15 disposed so as to cover the grating 29. For example, Al, Au, or the like is vapor-deposited such as to cover the area 12 formed with the grating 29, whereby the reflecting film 15 is provided. Thus, the spectroscopic unit 3 is a reflection type grating constructed by vapor-depositing the reflecting film 15 onto the grating 29 having a plurality of grating grooves 14.

As illustrated in Fig. 1, a light transmitting substrate 16 is fitted into the recess 9 so as to oppose the spectroscopic unit 3. The light transmitting substrate 16 is formed into a rectangular plate from any of light transmitting glass materials such as BK7, Pyrex (registered trademark), and silica, plastics, and the like, and transmits the light L1, L2 therethrough. The upper face of the light transmitting substrate 16 is formed with a light absorbing layer 16a having a light transmitting opening 16c for transmitting the light L1, L2 therethrough. Examples of materials for the light absorbing layer 16a include black resists, color resins (e.g., silicone, epoxy, acrylic, urethane, polyimide, and composite resins) containing fillers (e.g., carbon and oxides), metals and metal oxides of Cr, Co, and the like, their multilayer films, and porous ceramics and metals and metal oxides. Wiring (not depicted) is disposed on the upper or lower side of light absorbing layer 16a.

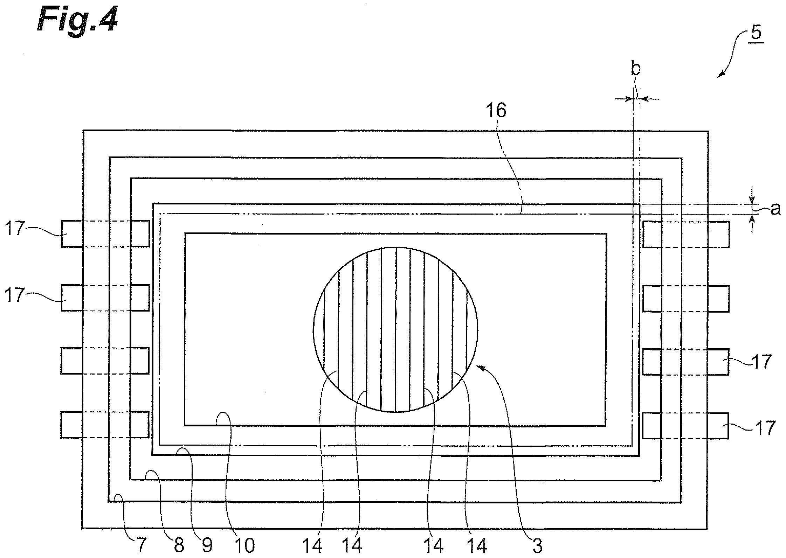

Fig. 4 is a plan view of the box 5. As illustrated in Fig. 4, the light transmitting substrate 16 and the box 5 are constructed such that a gap b between a side face of the recess 9 and a side face of the light transmitting substrate 16 in the arranging direction of the grating grooves 14 is narrower than a gap a between a side face of the recess 9 and a side face of the light transmitting substrate 16 in a direction orthogonal to the arranging direction of the grating grooves 14.

As illustrated in Fig. 1, the photodetector 4 is attached onto the light transmitting substrate 16. The photodetector 4 is shaped like a rectangular plate, whose surface on the spectroscopic unit 3 side is formed with a light detecting unit 21. The photodetector 4 is attached to the light transmitting substrate 16 by face-down bonding with bumps 18. Through the bumps 18, the photodetector 4 is electrically connected to the wiring disposed on the light transmitting substrate 16. Between the light transmitting substrate 16 and the photodetector 4, areas excluding the optical paths of the light L1, L2 are coated with a resin agent 20 covering the bumps 18 in order to improve the connection strength between the light transmitting substrate 16 and the photodetector 4.

The light detecting unit 21 is a CCD image sensor, a PD array, a CMOS image sensor, or the like, in which a plurality of channels are arranged in a row along the arranging direction of the grating grooves 14. When the light detecting unit 21 is a CCD image sensor, the intensity information of light at its incident position on two-dimensionally arranged pixels is subjected to line binning, so as to yield light intensity information at one-dimensional positions, and the intensity information at the one-dimensional positions is read in time series. That is, a line of pixels subjected to line binning forms one channel. In the case where the light detecting unit 21 is a PD array or CMOS image sensor, intensity information of light at its incident position on one-dimensionally arranged pixels is read in time series, whereby one pixel forms one channel.

When the light detecting unit 21 is a PD array or CMOS image sensor in which pixels are arranged two-dimensionally, a line of pixels aligning in a one-dimensional arrangement direction parallel to the arranging direction of the grating grooves 14 forms one channel. When the light detecting unit 21 is a CCD image sensor, one having a channel interval in the arrangement direction of 12.5 µm, a channel full length (length of the one-dimensional pixel row subjected to line binning) of 1 mm, and 256 arrangement channels, for example, is used for the photodetector 4.

The photodetector 4 is also formed with a light transmitting hole 22, disposed in parallel with the light detecting unit 21 in the channel arrangement direction, for transmitting the light L1 proceeding to the spectroscopic unit 3. The light transmitting hole 22, which is a slit (e.g., with a length of 0.5 to 1 mm and a width of 10 to 100 µm) extending in a direction substantially orthogonal to the channel arrangement direction, is formed by etching or the like while being aligned with the light detecting unit 21 with high precision.

Base end parts of a plurality of leads 17 embedded in the box 5 are exposed into the recess 8. Opposite end parts of the leads 17 extend to outside of the box 5. The base end parts of the leads 17 are electrically connected to the wiring of the light transmitting substrate 16 by wire-bonding with wires 16b. An electric signal generated when the light detecting unit 21 of the photodetector 4 receives the light L2 is taken out of the spectrometer 1 through the bumps 18 of the photodetector 4, the wiring of the light transmitting substrate 16, the wires 16b, and the leads 17.

The lid 6 is fitted into the recess 7. The lid 6 has a light entrance hole 23 for allowing the light L1 to enter the inside of the package 2. A light transmitting window member 24 is attached to the light entrance hole 23. The window member 24 is formed by any of light transmitting glass materials such as BK7, Pyrex (registered trademark), and silica, plastics, and the like.

As illustrated in Fig. 3, the grooves 11 are located on both sides of the spectroscopic unit 3 in the arranging direction of the grating grooves 14 while extending in a direction orthogonal to the arranging direction of the grating grooves 14. The grooves 11 are formed integrally at the time when the box 5 is formed.

In thus constructed spectrometer 1, the light L1 passes through the light entrance hole 23 of the lid 6 and the window member 24, so as to enter the inside of the package 1, and then passes through the light transmitting hole 22 of the photodetector 4 and the light transmitting substrate 16, thereby reaching the spectroscopic unit 3. The light L1 having reached the spectroscopic unit 3 is spectrally resolved and reflected thereby toward the light detecting unit 21 of the photodetector 4. The light L2 spectrally resolved and reflected by the spectroscopic unit 3 is transmitted through the light transmitting substrate 16 and detected by the light detecting unit 21 of the photodetector 4.

A method of manufacturing the above-mentioned spectrometer 1 will now be explained.

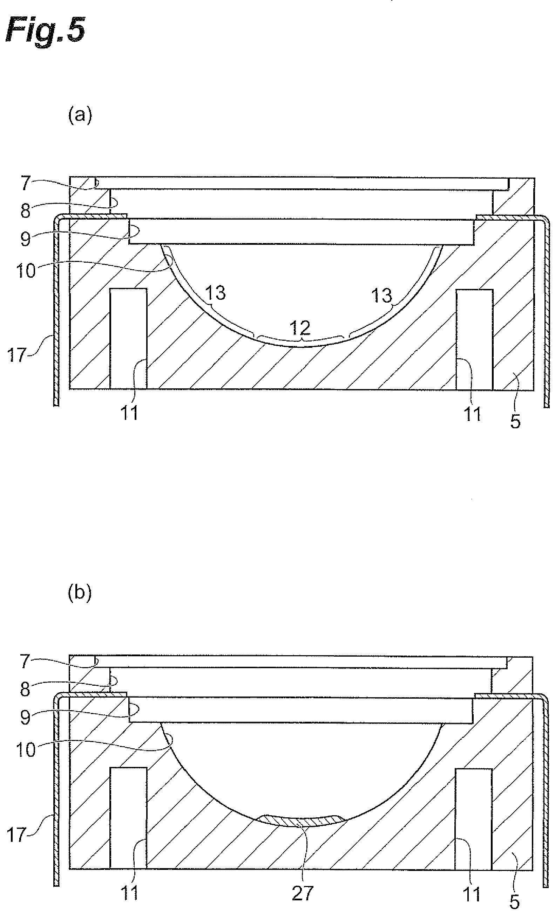

First, as illustrated in Fig. 5(a), the box 5 is molded from a resin so as to have a rectangular parallelepiped outer form with a pair of grooves 11 and the semispherical recess 10. Here, in the inner wall face of the recess 10, the bottom area 12 and the area 13 surrounding the bottom area 12 exist while being continuous with each other on the same curved surface. The box 5 is molded such that the leads 17 are embedded therein.

Subsequently, as illustrated in Fig. 5(b), a photocurable resin agent 27 is applied to the bottom area 12 in the recess 10 of thus prepared box 5.

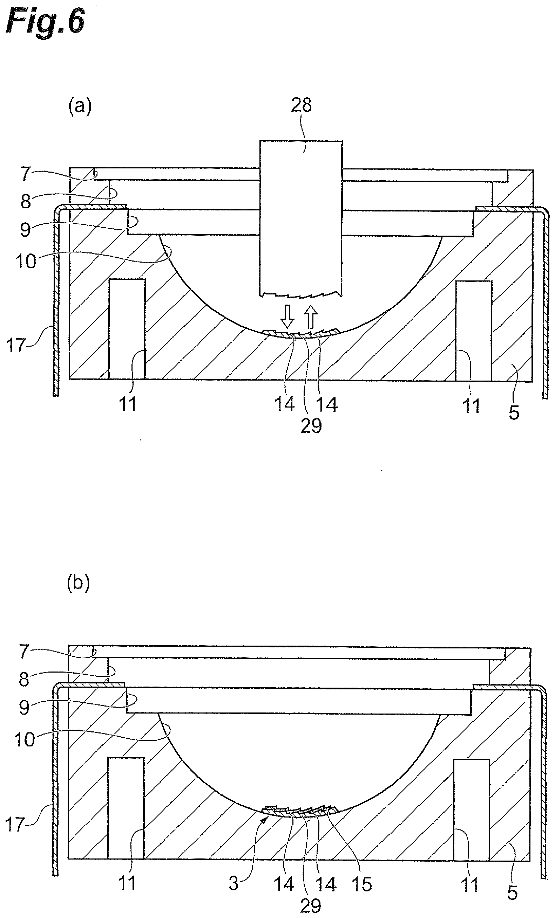

Then, as illustrated in Fig. 6(a), a mold 28 for forming the grating grooves 14 is pressed against the applied resin agent 27, while the latter is irradiated with light, so as to be cured and provided with the grating 29 formed with a plurality of grating grooves. Here, if necessary, the grating 29 may be heat-treated, so as to become stronger.

Next, as illustrated in Fig. 6(b), Al, Au, or the like is vapor-deposited so as to cover the grating 29, thereby providing the reflecting film 15. This yields the spectroscopic unit 3 comprising the grating 29 formed with a plurality of grating grooves 14 and the reflecting film 15 disposed on the grating 29.

On the other hand, the light transmitting substrate 16 provided with wiring on the upper face and the photodetector 4 formed with the light transmitting hole 22 are prepared, and the photodetector 4 and the light transmitting substrate 16 are electrically connected to each other through the wiring of the light transmitting substrate 16 and the bumps 18 of the photodetector 4. Thereafter, the resin agent 20 is applied sideways so as to cover the bumps 18, thereby bonding the light transmitting substrate 16 and the photodetector 4 to each other.

Subsequently, the light transmitting substrate 16 having the photodetector 4 attached thereto is accommodated in the box 5 formed with the spectroscopic unit 3 as mentioned above. Specifically, as illustrated in Fig. 1, the light transmitting substrate 16 having the photodetector 4 attached to its upper face is fitted into the recess 9 of the box 5. Here, a resin agent (not depicted) is applied between the light transmitting substrate 16 and the box 5, so as to bond the light transmitting substrate 16 to the box 5.

Then, the wiring of the light transmitting substrate 16 is electrically connected to the base end parts of the leads 17 through the wires 16b. Finally, the lid 6 is fitted into the recess 7 of the box 5 so that they are joined together airtightly, whereby the spectrometer 1 in which the photodetector 4 is accommodated in the package 2 is obtained.

As explained in the foregoing, the box 5 of the package 2 has a rectangular parallelepiped outer form and the recess 10 whose bottom face is a semispherical curved surface, while the area 12 and the area 13 surrounding the area 12 are formed in the bottom face of the recess. Consequently, in the box 5 of the package 2, portions surrounding the first and second areas 12, 13 where the mold for forming the grating grooves 14 is pressed are relatively thick, while the areas 12, 13 are continuous with each other on the same curved surface. Therefore, distortions are hard to occur in the box 5 when the mold 28 for forming the grating grooves 14 is pressed against the box 5. Also, the distortions generated in the box 5, if any, are dispersed in the area of the curved surface, whereby the grating grooves are inhibited from shifting their positions. This makes it possible to form the grating grooves 14 by directly pressing the mold 28 against the resin agent 27 applied to the area 12 in the recess 10 of the box 5, thereby providing the spectroscopic unit 3. Hence, the highly reliable spectrometer 1 can be manufactured easily.

In the spectrometer 1, the bottom face of the box 5 is provided with a pair of grooves 11 which are located on both sides of the spectroscopic unit 3 in the arranging direction of the grating grooves 14 and extend in a direction orthogonal to the arranging direction of the grating grooves 14. Therefore, even if sink marks occur when preparing the resin-molded box 5, for example, the pair of grooves 11 will mitigate the sink marks in the predetermined direction. When the pair of grooves 11 are not formed, a thick portion exists in the arranging direction of the grating grooves 14, which raises the possibility of sink marks (surface deformations) on the surface of the recess 10 spreading their influence over the arranging direction of the grating grooves 14. If the area 12 deforms in the arranging direction of the grating grooves 14, the optimal amount for dripping the photocurable resin agent will change, thereby lowering the stability at the time of forming the grating grooves, which may cause the grating grooves 14 to shift their positions. Forming the pair of grooves 11 and appropriately decreasing the thickness of the thick portion mitigates the influence of sink marks in the arranging direction of the grating grooves 14, thereby reducing the deformations of the area 12. Therefore, even when sink marks are generated in the box 5, the grating grooves 14 are inhibited from shifting their positions in the arranging direction of the grating grooves 14, whereby a further highly reliable spectrometer can be manufactured. Forming the grooves 11 can also minimize thermal expansion and shrinkage, thereby inhibiting the grating grooves 14 from shifting their positions. If the grating grooves 14 incur a positional deviation in their arranging direction, the wavelength of light to be resolved spectrally may shift. Because of the reasons mentioned above, the grating grooves 14 are inhibited from shifting their positions in the arranging direction of the grating grooves 14, i.e., spectral direction of light, whereby the spectral characteristic can be kept from lowering in the spectrometer 1. Hence, a further highly reliable spectrometer can be manufactured.

The spectrometer 1 has the light transmitting substrate 16 fitted into the recess 9 of the box 5 so as to oppose the spectroscopic unit 3, while the photodetector 4 is attached onto the light transmitting substrate 16. Therefore, the photodetector 4 can be aligned with the spectroscopic unit 3 easily with high precision in the spectrometer 1.

In the spectrometer 1, the gap b between a side face of the recess 9 and a side face of the light transmitting substrate 16 in the arranging direction of the grating grooves 14 is narrower than the gap a between a side face of the recess 9 and a side face of the light transmitting substrate 16 in a direction orthogonal to the arranging direction of the grating grooves 14. Therefore, when attaching the light transmitting substrate 16 to the box 5, the light transmitting substrate 16 is accurately positioned in the arranging direction of the grating grooves 14, whereby the photodetector 4 attached onto the light transmitting substrate 16 is also precisely positioned in the arranging direction of the grating grooves 14. If the photodetector 4 incurs a positional deviation in the arranging direction of the grating grooves 14, the wavelength of light to be detected may shift. Since the photodetector 4 can precisely be positioned in the arranging direction of the grating grooves 14, the light detection characteristic can be inhibited from lowering in the spectrometer 1. Since the gap between the side face of the recess 9 and the side face of the light transmitting substrate 16 in a direction orthogonal to the arranging direction of the grating grooves 14 is made relatively wide in the spectrometer 1, the resin agent as an adhesive is easily pushed out when mounting the light transmitting substrate 16 to the recess 9 of the box 5. Also, since the gap between the side face of the recess 9 and the side face of the light transmitting substrate 16 in a direction orthogonal to the arranging direction of the grating grooves 14 is made relatively wide, handling is easy. Therefore, the light transmitting substrate 16 can be mounted to the recess 9 of the box 5 easily with high precision.

The present invention is not limited to the above-mentioned embodiment.

For example, while the above-mentioned embodiment uses the photocurable resin agent 27, so as to form the grating 29 by irradiation with light, the grating 29 can be formed by heat. First, in this case, a solid or gelled material such as an organic material, e.g., an epoxy or acrylic resin, an inorganic material, e.g., glass, an organic/inorganic hybrid material, or the like is placed in the bottom area 12 of the recess 9. Such a material can be placed by disposing a layer of the material by vapor deposition or CVD (Chemical Vapor Deposition). Subsequently, the mold 28, which has been heated beforehand, is pressed against the material placed in the bottom area 12 of the recess 9, so as to make the grating 29. Here, the mold 28 can be formed from any of nickel, silicon, various alloys, carbon, silica, and the like. Preferably, the temperature to which the mold 29 is heated is not higher than the glass transition temperature of the material constituting the box 5.

### Industrial Applicability

The present invention can provide a method for manufacturing a spectrometer which can easily manufacture a highly reliable spectrometer.

### Reference Signs List

1...spectrometer; 2...package; 3...spectroscopic unit; 4...photodetector; 10...recess; 11...groove; 12...area (first area); 13...area (second area); 14...grating groove; 27...resin agent; 28...mold; 29...grating

## Claims

1. A method for manufacturing a spectrometer (1) for spectrally resolving light with a spectroscopic unit (3) and detecting the light with a photodetector (4), the method comprising the steps of:
preparing a package (2) having a rectangular parallelepiped box (5), which is provided with a recess (10) whose bottom face is a semispherical curved surface and has a first area (12) and a second area (13) surrounding the first area, the first and second areas being continuous with each other on the same curved surface;
forming a resin layer (27) in the first area after preparing the package;
forming a plurality of grating grooves (14) arranged in a row along a predetermined direction by pressing a mold (28) against the resin layer after forming the resin layer;
providing the package (2) with the spectroscopic unit (3) by forming the resin layer (27) with a reflecting film (15) after forming the grating grooves (14); and
accommodating the photodetector (4) into the package (2) after providing the spectroscopic unit (3).

2. A method for manufacturing a spectrometer (1) according to claim 1;
Wherein, in the step of forming the resin layer (27), a photocurable resin agent is placed in the first area (12) as the resin layer; and
Wherein, in the step of forming the grating grooves (14), the grating grooves are formed by curing the resin agent by irradiation with light while pressing a light transmitting mold (28) against the resin agent.

3. A method for manufacturing a spectrometer (1) according to claim 1;
Wherein, in the step of preparing the package, the package (2) is integrally molded from a resin such as to form a pair of sink mark mitigating grooves (11) which are located on both sides of the spectroscopic unit (3) in the predetermined direction and extend in a direction orthogonal to the predetermined direction, thereby mitigating sink marks in the predetermined direction if sink marks occur when preparing the resin-molded box.

## Patentansprüche

1. Verfahren zur Herstellung eines Spektrometers (1) zum spektralen Zerlegen von Licht mit einer Spektroskopieeinheit (3) und Erfassen des Lichts mit einem Fotodetektor (4), wobei das Verfahren die Schritte umfasst von:
Vorbereiten eines Pakets (2), das eine rechteckige quaderförmige Box (5) aufweist, die mit einer Vertiefung (10) bereitgestellt ist, deren Bodenfläche eine halbkugelförmige gekrümmte Fläche ist und die einen ersten Bereich (12) und einen zweiten Bereich (13), der den ersten Bereich umgibt, aufweist, wobei der erste und zweite Bereich an derselben gekrümmten Fläche miteinander fortlaufend sind;
Bilden einer Harzschicht (27) im ersten Bereich nach Vorbereiten des Pakets;
Bilden einer Vielzahl von Rasterkerben (14), die in einer Reihe entlang einer vorgegebenen Richtung angeordnet sind, durch Pressen einer Gussform (28) nach Bilden der Harzschicht gegen die Harzschicht;
Bereitstellen des Pakets (2) mit der Spektroskopieeinheit (3) durch Bilden der Harzschicht (27) mit einem reflektierenden Film (15), nach Bilden der Rasterkerben (14); und
Aufnehmen des Fotodetektors (4) in dem Paket (2) nach Bereitstellen der Spektroskopieeinheit (3).

2. Verfahren zur Herstellung eines Spektrometers (1) nach Anspruch 1;
wobei im Schritt zum Bilden der Harzschicht (27) ein lichthärtendes Harzmittel als die Harzschicht im ersten Bereich (12) platziert wird; und
wobei im Schritt zum Bilden der Rasterkerben (14) die Rasterkerben durch Härten des Harzmittels durch Bestrahlung mit Licht gebildet werden, während eine lichtdurchlässige Gussform (28) gegen das Harzmittel gepresst wird.

3. Verfahren zur Herstellung eines Spektrometers (1) nach Anspruch 1;
wobei im Schritt zum Vorbereiten des Pakets das Paket (2) in einem Strück aus einem Harz gegossen wird, um ein Paar von Einfallstellenabschwächungskerben (11) zu bilden, die an beiden Seiten der Spektroskopieeinheit (3) in der vorgegebenen Richtung liegen und sich in einer Richtung senkrecht zur vorgegebenen Richtung erstrecken, wodurch Einfallstellen in der vorgegebenen Richtung abgeschwächt werden, falls Einfallstellen auftreten, wenn die harzgegossene Box vorbereitet wird.

## Revendications

1. Procédé de fabrication d'un spectromètre (1) pour une résolution spectrale de lumière avec une unité spectroscopique (3) et une détection de la lumière avec un photodétecteur (4), le procédé comprenant les étapes consistant à :
préparer un conditionnement (2) ayant une boîte parallélépipédique rectangulaire (5), qui est doté d'un évidement (10) dont la face inférieure est une surface incurvée hémisphérique et présente une première zone (12) et une seconde zone (13) entourant la première zone, les première et seconde zones étant continues l'une par rapport à l'autre sur la même surface incurvée ;
former une couche de résine (27) dans la première zone après avoir préparé le conditionnement ;
former une pluralité de rainures de réseau (14) agencées en une rangée le long d'une direction prédéterminée en pressant un moule (28) contre la couche de résine après la formation de la couche de résine ;
doter le conditionnement (2) de l'unité spectroscopique (3) en formant un film réfléchissant (15) sur la couche de résine (27) après la formation des rainures de réseau (14) ; et
loger le photodétecteur (4) dans le conditionnement (2) après avoir fourni l'unité spectroscopique (3).

2. Procédé de fabrication d'un spectromètre (1) selon la revendication 1 ;
dans lequel, dans l'étape de formation de la couche de résine (27), un agent de résine photodurcissable est placé dans la première zone (12) en tant que couche de résine ; et
dans lequel, durant l'étape de formation des rainures de réseau (14), les rainures de réseau sont formées en durcissant l'agent de résine par irradiation avec de la lumière tout en pressant un moule de transmission de lumière (28) contre l'agent de résine.

3. Procédé de fabrication d'un spectromètre (1) selon la revendication 1 ;
dans lequel, durant l'étape de préparation du conditionnement, le conditionnement (2) est moulé intégralement à partir d'une résine de manière à former une paire de rainures d'atténuation de dépression en surface (11) qui sont situées des deux côtés de l'unité spectroscopique (3) dans la direction prédéterminée et s'étendent dans une direction orthogonale à la direction prédéterminée, atténuant ainsi des dépressions en surface dans la direction prédéterminée si des dépressions en surface apparaissent pendant la préparation de la boîte moulée en résine.
